# EUROPÄISCHE PATENTANMELDUNG

(11) **EP 0 628 466 A1**
(43) Veröffentlichungstag der Anmeldung: **14.12.1994**
(21) Anmeldenummer: 94108771.0
(22) Anmeldetag: 08.06.1994
(51) Int. Cl.: B62D 5/083

(54) **Verfahren und Vorrichtung zur Einstellung der hydraulischen Neutralposition eines Servoventils**

(30) Priorität: 09.06.1993 DE 4319131
(71) Anmelder: TRW Fahrwerksysteme GmbH & Co. KG, D-40547 Düsseldorf (DE)
(72) Erfinder: Perez Lumbreras, Manuel, ES-31010 Baranain (ES)
(74) Vertreter: Stenger, Watzke & Ring Patentanwälte

(57) **Zusammenfassung**

Zur Einstellung der hydraulischen Neutralposition eines Servoventils in einem montierten Servolenksystem, bestehend aus einer Eingangswelle 3, einer Ausgangswelle 4, einem Torsionsstab 7, der mit einem Ende mit der Eingangswelle 3 und dem anderen Ende mit der Ausgangswelle 4 verbunden ist, und einer mit der Ausgangswelle 4 in Eingriff stehenden Ventilhülse 11, welche die Eingangswelle 3 umgibt, wird verfahrensmäßig vorgeschlagen, daß die Ventilhülse 11 relativ zur Ausgangswelle 4 um eine gemeinsame Mittelachse verdreht und bei Erreichen der hydraulischen Neutralposition an der Ausgangswelle 4 fixiert wird. Vorrichtungsseitig wird ein die Ventilhülse 11 und die Ausgangswelle 4 relativ zueinander fixierendes Befestigungsmittel vorgeschlagen, welches in seiner Position zu wenigstens einem der beiden Bauteile variabel ist.

## Beschreibung

Die Erfindung betrifft ein Verfahren zur Einstellung der hydraulischen Neutralposition eines Servoventils in einem montierten Servolenksystem und eine Vorrichtung zur Durchführung des Verfahrens. Das montierte Servolenksystem besteht aus einer Eingangswelle, einer Ausgangswelle, einem Torsionsstab, der mit einem Ende mit der Eingangs- und dem anderen Ende mit der Ausgangswelle verbunden ist, und einer mit der Ausgangswelle in Eingriff stehenden Ventilhülse, welche die Eingangswelle umgibt.

Derartige Servolenksysteme sind an sich bekannt. Eine mit einer Lenkstange verbundene Eingangswelle ist über einen Torsionsstab mit einer mit einem Ritzel versehenen Ausgangswelle verbunden. Das Ritzel wirkt auf die Zahnstange einer Lenkung. Durch Drehung der Lenkstange wird automatisch die Eingangswelle mitgedreht. In Abhängigkeit von der Federsteifigkeit des Torsionsstabes wird somit auch die Ausgangswelle mit dem Ritzel gedreht und damit die Zahnstange bewegt. Für derartige Lenksysteme ist die Verwendung von Servoventilen bekannt. Dazu ist in bekannter Weise eine Ventilhülse vorgesehen, welche mit der Ausgangswelle in Eingriff steht und die Eingangswelle umgibt. Von einer Pumpe wird Hydraulikflüssigkeit durch das beschriebene Ventil bei einer Neutralstellung der Ventilhülse zur Eingangswelle in ein Ölreservoir gepumpt. Bei einer relativen Verdrehung der Ventilhülse zur Eingangswelle wird ein Druck aufgebaut, der je nach Drehrichtung der Lenkwelle in die eine oder andere Kammer eines Hydraulikmotors gelangt, welcher die Zahnstangenbewegung in eine der beiden möglichen Richtungen unterstützt. Die andere Kammer wird gleichzeitig mit dem Tank verbunden.

Ein derartiges vorbekanntes Servolenksystem ist beispielsweise aus der DE-OS 40 38 678 bekannt. Diese offenbart den beschriebenen Aufbau in einem Gehäuse. Zur Montage des Servolenksystems werden die Ventilhülse und die Ausgangswelle miteinander verbunden, beispielsweise versplintet, und der Torsionsstab mit seinem einen Ende in der Ausgangswelle fixiert. Auch diese Fixierung kann durch Versplintung, Verstemmung oder dgl. bewirkt werden. Daran anschließend wird die Eingangswelle auf den Torsionsstab aufgeschoben und gleichzeitig in die Ventilhülse eingesetzt.

In dieser Phase kommt es selbstverständlich darauf an, die Eingangswelle in ihrer radialen Position zur Ventilhülse so festzulegen, daß das System in einer hydraulischen Neutralposition fixiert ist. Das bedeutet, daß die sogenannte hydraulische Mitte eingestellt werden muß, damit eine Relativverdrehung zwischen Ventilhülse und Eingangswelle die gewünschte Lenksteuerung bewirkt. In dem aus dem Stand der Technik bekannten Verfahren wird diese Einstellung der hydraulischen Neutralposition derart durchgeführt, daß zunächst die Eingangswelle in ihrer radialen Position relativ zur Ventilhülse, und damit automatisch auch relativ zum Torsionsstab, eingestellt wird. Anschließend wird eine Durchgangsbohrung durch die Eingangswelle und den Torsionsstab ausgeführt. Diese Durchgangsbohrung steht senkrecht auf der gemeinsamen Mittelachse von Torsionsstab und Eingangswelle. In diese Durchgangsbohrung wird ein Splint gesetzt. Damit ist die hydraulische Neutralposition ausgeführt. Diese Vorgehensweise ist jedoch mit Toleranzen behaftet.

Sowohl die bereits genannte DE-OS 40 38 678 aus auch die DE-PS 36 28 360 offenbaren weiterhin, zur Durchführung einer weiteren Feineinstellung der hydraulischen Neutralposition den in die Durchgangsbohrung durch die Eingangswelle und den Torsionsstab eingesetzten Splint asymmetrisch auszubilden, so daß durch Verdrehen des Splintes die Eingangswelle in ihrer radialen Position zum Torsionsstab und damit automatisch zur Ventilhülse eingestellt werden kann. Nach Durchführung der Feineinstellung muß diese Position fixiert werden.

Ein Nachteil dieser vorbekannten Verfahren und Vorrichtungen besteht darin, daß bei der Fixierung des Splintes leicht wieder eine Verschiebung der Radialpositionen von Eingangswelle und Torsionsstab zueinander vorkommt. Daher ist nicht nur das Einstellverfahren, sondern auch das Fixierverfahren sehr aufwendig. Darüber hinaus ist das Einstellverfahren durch das Ausführen der Bohrung mit der Aufbringung von Kräften verbunden. Dadurch kommt es zu Belastungsmomenten und Auslenkungen aus der Voreinstellung. Weiterhin muß die Eingangswelle in ihrem Außenbereich abgedichtet werden. Da der gesamte Raum zwischen Eingangswelle und Torsionsstab unter Hydraulikdruck steht, muß am oberen Drehstabende eine ausreichende Dichtung vorgesehen werden. Diese muß selbstverständlich auch die durchgeführte Bohrung und Versplintung abdichten. Nach der durchgeführten Montage des Servolenksystems ist eine weitere Einstellung der hydraulischen Neutralposition nicht mehr möglich. Soll eine solche durchgeführt werden, so kann dies nur durch Demontage und Ersetzen des Torsionsstabes realisiert werden.

Davon ausgehend liegt der vorliegenden Erfindung die **Aufgabe** zugrunde, ein Verfahren zur Einstellung der hydraulischen Neutralposition eines Servoventils anzugeben, mit welchem die Einstellung am montierten Servolenksystem einfach durchgeführt werden kann und welches auch ein Nachstellen ermöglicht. Darüber hinaus soll eine Vorrichtung angegeben werden, mit welcher das erfindungsgemäße Verfahren durchgeführt werden kann.

Als technische **Lösung** der genannten Aufgabe wird das erfindungsgemäße Verfahren zur Einstellung der hydraulischen Neutralposition eines Servoventils in einem montierten Servolenksystem der gattungsgemäßen Art angegeben, welches dadurch gekennzeichnet ist, daß die Ventilhülse relativ zur Ausgangswelle um eine gemeinsame Mittelachse verdreht und bei Erreichen der hydraulischen Neutralposition an der Ausgangswelle fixiert wird.

Vorrichtungsseitig wird als technische **Lösung** ein Servolenksystem der gattungsgemäßen Art dadurch verbessert, daß in dem Bereich, in dem sich die Ventilhülse und die Ausgangswelle axial überlappen, ein beide relativ zueinander fixierendes Befestigungsmittel angeordnet ist, welches in seiner Umfangsrichtung zu wenigstens einem von beiden variabel ist.

Mit dem erfindungsgemäßen Verfahren und der erfindungsgemäßen Vorrichtung kann nunmehr in vorteilhafter Weise die Einstellung der hydraulischen Neutralposition an dem fertig vormontierten Servolenksystem durchgeführt werden. Darüber hinaus ist es nunmehr möglich, den Torsionsstab vor dem Balancieren sowohl an der Ausgangswelle als auch an der Eingangswelle zu fixieren, da die Hydraulikhülse im nachhinein positioniert wird. Dadurch wird ermöglicht, daß der Torsionsstab in die Eingangswelle einsetzbar ist, d.h. die Eingangswelle an ihrem freistehenden Ende verschlossen ausgebildet sein kann. Dadurch verringert sich der Bauteileaufwand für das erfindungsgemäße Servolenksystem erheblich.

Darüber hinaus ist jederzeit eine Nachstellung möglich. Schlimmstenfalls muß lediglich das vorrichtungsseitige Befestigungsmittel ausgewechselt werden.

Das erfindungsgemäße Verfahren wird in vorteilhafter Weise dahingehend weiter ausgestaltet, daß die Ventilhülse zur Ausgangswelle in einem festgelegten Winkelbereich in beide Richtungen verdreht wird. Nachdem die Ventilhülse in einer vorjustierten Position relativ zur Eingangswelle angeordnet wurde, kann nun nach dem erfindungsgemäßen Verfahren in einem festgelegten Winkelbereich die Feineinstellung durchgeführt werden.

Mit Vorteil wird angegeben, daß die Fixierung in der hydraulischen Neutralposition durch Verkleben durchgeführt wird. Dadurch wird neben der verfahrensmäßigen Vereinfachung und der bauteilseitigen Optimierung auch bewirkt, daß keine mechanischen Kräfte mehr die feineingestellte Bauteilgruppe verstellen.

In vorteilhafter Weise wird vorgeschlagen, das montierte Servolenksystem in eine hydraulisch dichte Vorrichtung einzusetzen und mit einem durch die Vorrichtungswandung ragenden Werkzeug einzustellen. Dadurch kann auf besondere Druckführungen bei der Einstellung des Servolenksystems verzichtet werden, so daß dieses wie im Einbauzustand eingestellt werden kann. In vorteilhafter Weise wird daher vorgeschlagen, als Vorrichtung ein Servolenksystem-Gehäuse zu verwenden.

Mit Vorteil wird vorgeschlagen, daß bei der Einstellung des Servolenksystems in einem Gehäuse die Ausgangswelle gegen Verdrehung fixiert wird. Weiterhin wird vorgeschlagen, das Verdrehwerkzeug gegen die Wandung der Vorrichtung abzudichten. Schließlich wird vorgeschlagen, als letzten Schritt die Werkzeugöffnung in der Vorrichtungswandung zu verschließen.

Das die Ventilhülse und die Ausgangswelle relativ zueinander fixierende Befestigungsmittel kann von unterschiedlicher Art sein. So kann eine Kombination von Schrauben und Langloch, von Schraubenkopf und Rändelung und dgl. verwendet werden. Vorrichtungsseitig wird die Erfindung mit Vorteil dahingehend weiter ausgestaltet, daß das Befestigungsmittel eine Schraube ist, deren Schraubenkopf zum Gewindeschaft exzentrisch angeordnet ist. Diese Schraube wird in das im Überlappungsbereich von Ventilhülse und Ausgangswelle innenliegende Bauteil eingeschraubt, wozu sie ein Loch im außenliegenden Bauteil durchdringt. Dieses Loch hat zweckmäßigerweise eine Größe, die es ermöglicht, daß bei Verdrehen der exzentrischen Schraube das außenliegende Bauteil relativ zum innenliegenden Bauteil verdreht wird. Der Durchmesser des Schraubenkopfes begrenzt den Verstellwinkel.

Mit Vorteil wird weiterhin angegeben, daß bei der Verwendung von Schrauben das Gewinde verstemmt ist. Dadurch wird einer nachträglichen Verstellung der eingestellten Radialposition von Ventilhülse und Ausgangswelle entgegengewirkt.

Weiterhin wird mit Vorteil angegeben, daß der Torsionsstab in der Eingangswelle durch eine Axialverzahnung befestigt ist.

In vorteilhafter Weise wird vorgeschlagen, daß das montierte Servolenksystem in eine hydraulisch dichte Vorrichtung eingebaut ist. Mit besonderem Vorteil wird vorgeschlagen, daß die hydraulisch dichte Vorrichtung ein Servolenksystem-Gehäuse ist. Durch diese Maßnahme ist es möglich, das montierte Servolenksystem ins Gehäuse einzubauen, hydraulisch zu justieren und im Gehäuse einbaufertig zu belassen. In vorteilhafter Weise wird zum Zwecke der Einstellung ein Einstellwerkzeug hydraulisch abgedichtet in die Gehäusewandung eingesetzt. Als Werkzeug wird ein Schraubendreher vorgeschlagen, der auch zur Fixierung der Schraube verwendet werden kann. In vorteilhafter Weise wird vorgeschlagen, den Schraubendreher gegen die Einsetzöffnung in der Einstellvorrichtung mittels einer Ringdichtung abzudichten. Schließlich wird vorgeschlagen, zur Fixierung der Ausgangswelle gegen Verdrehung eine Keilvorrichtung zu verwenden. Diese Keilvorrichtung kann anstelle der Zahnstangen zur Verkeilung mit dem Ritzel in das Gehäuse eingesetzt werden. Weiterhin wird mit Vorteil angegeben, zum Verschließen der Einsetzöffnung in der Gehäusewandung einen Gewindebolzen einzusetzen.

Das erfindungsgemäße Verfahren und die erfindungsgemäße Vorrichtung zur Durchführung des Verfahrens ermöglichen eine Einstellung der hydraulischen Neutralposition an einem bereits montierten Servolenksystem. Darüber hinaus ermöglichen sie verfahrensseitige Vereinfachungen bei der Einstellung und Fixierung. Darüber hinaus wird das Servolenksystem durch Bauteilreduzierung und Vereinfachung wirtschaftlicher.

Weitere Vorteile und Merkmale der Erfindung ergeben sich aus der folgenden Beschreibung anhand der Figuren. Dabei zeigen:
- Fig. 1: eine schematische Schnittansicht eines Servolenksystems und ein schematisches Funktionsdiagramm mit dem Schnitt entlang der Linie A-A durch die montierte Ventilhülse;
- Fig. 2: einen Schnitt entlang der Linie B-B gemäß Fig. 1 durch die Ventilhülse in einer ersten Einstellposition;
- Fig. 3: einen Schnitt entlang der Linie B1-B1 gemäß Fig. 1 durch die Ventilhülse in einer anderen Einstellposition;
- Fig. 4: eine Detailansicht des Schraubenkopfes in Richtung des Pfeiles X gemäß Fig. 2 und
- Fig. 5: eine schematische Schnittansicht eines Servolenksystems in der Einstellposition.

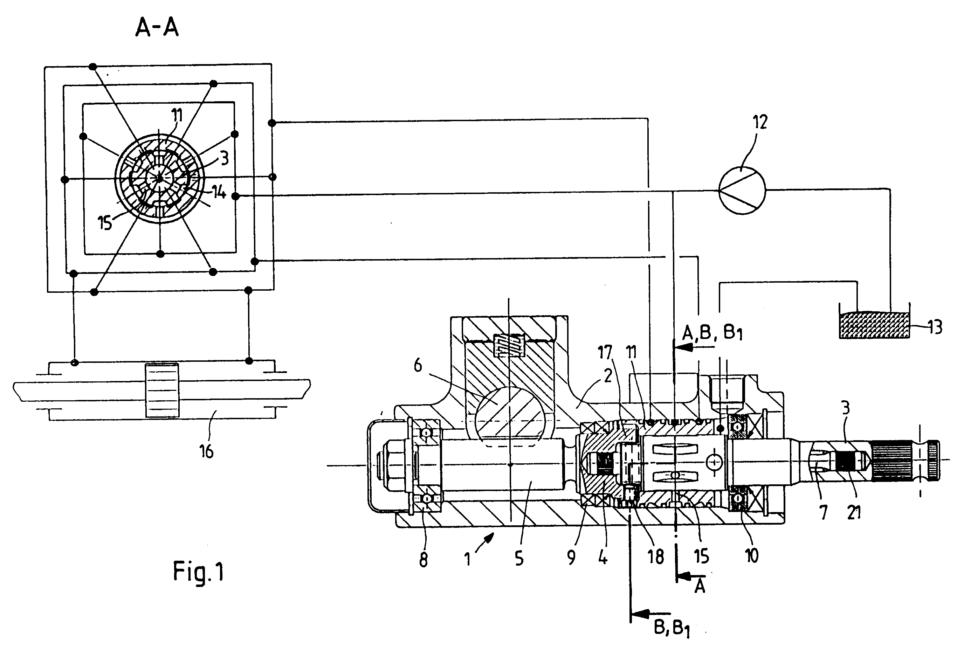

Bei dem in Fig. 1 gezeigten Servolenksystem 1 ist in ein Gehäuse 2 eine Eingangswelle 3 eingeführt. Die Eingangswelle 3 steht in nicht gezeigter Weise in Verbindung mit einer Lenkstange. Eine Ausgangswelle 4 mit einem Ritzel 5 wirkt mit einer Zahnstange 6 zur Durchführung von Lenkbewegungen zusammen. Die Eingangswelle 3 und die Ausgangswelle 4 sind durch einen Torsionsstab 7 miteinander verbunden. Durch Drehen der Eingangswelle 3 wird die Ausgangswelle 4 in Abhängigkeit von dem Rückstellmoment des Torsionsstabes 7 mitgedreht und so eine Lenkung bewirkt. Die Eingangswelle und die Ausgangswelle sind in Lagern 8,9 und 10 in dem Gehäuse 2 positioniert. Im gezeigten Ausführungsbeispiel ist der Torsionsstab 7 sowohl in der Ausgangswelle 4 als auch in der Eingangswelle 3 durch eine Axialverzahnung befestigt. Die Eingangswelle 3 ist an ihrem freistehenden Ende verschlossen, was durch die Axialverzahnung 21 zwischen Torsionsstab 7 und Eingangswelle 3 ermöglicht wird. Die Eingangswelle ist im Inneren des Gehäuses 2 von einer Ventilhülse 11 umgeben. Durch im Gehäuse 2 angeordnete Bohrungen und nicht gezeigte Leitungen wird von einer Pumpe 12 Hydraulikdruck angelegt. Wie das Funktionsschema in Fig. 1 zeigt, weisen die Ventilhülse 11 und die Eingangswelle 3 miteinander zusammenwirkende Nuten 14 und Bohrungen 15 auf. Bei der hydraulischen Neutralposition, auch hydraulische Mittelstellung genannt, stehen die Nuten von Steuerhülse und Eingangswelle so zueinander, daß der Druck an allen Seiten gleich ist. In dem hydraulisch angeschlossenen Hydraulikmotor 16 herrscht somit Kräftegleichgewicht und es wird kein Steuermoment ausgeübt. Wird nun über das nicht gezeigte Lenkgestänge die Eingangswelle verdreht, so wird sie in Abhängigkeit von der Federsteifigkeit des Torsionsstabes 7 gegenüber der Ausgangswelle 4 und damit auch gegenüber der Ventilhülse 11 voreilend verdreht. Damit wird das Servoventil aus der hydraulischen Neutralposition herausgedreht, was bewirkt, daß die beiden Kammern des Hydraulikmotors 16 ins Ungleichgewicht kommen und somit eine Steuerkraft ausgeübt wird.

Die Verbindung zwischen der Ausgangswelle 4 und der Ventilhülse 11 wird im Eingriffsbereich 17, in welchem sich die beiden Bauteile überlappen, durch die Exzenterschraube 18 fixiert.

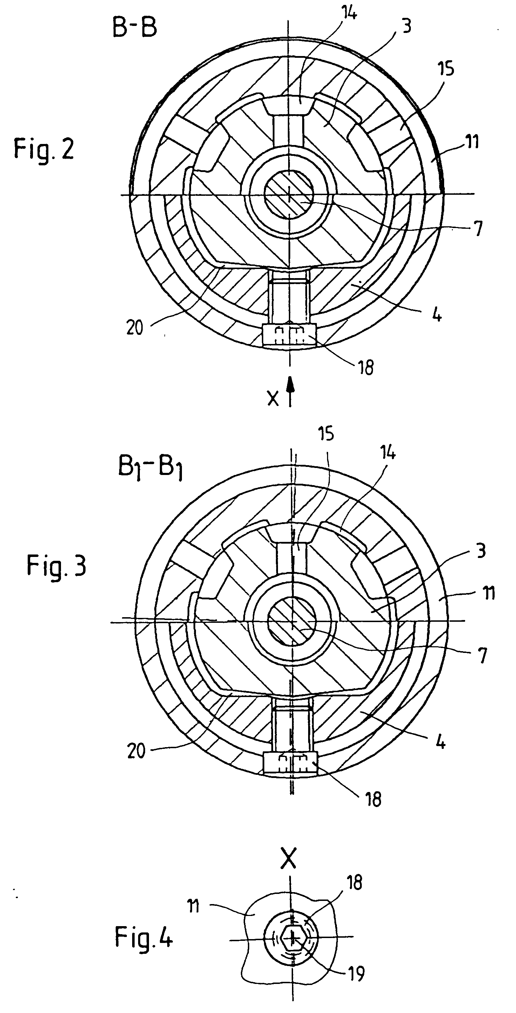

Die Montage des gezeigten Servolenksystems 1 erfolgt derart, daß zunächst in die Ausgangswelle 4 der Torsionsstab 7 eingesetzt wird. Am freien Ende des Torsionsstabes 7 wird die Eingangswelle 3 aufgesetzt. Durch Aufbringen einer Axialkraft wird der Drehstab in die Eingangs- und die Ausgangswelle gedrückt und dort durch die Axialverzahnung 21 fixiert. Dabei wird darauf geachtet, daß die Eingangswelle 3 zur Ausgangswelle in einer Grobeinstellung nahe der Neutralposition angeordnet ist. Die Ventilhülse wird durch die Eingangswelle geschoben. Durch Einsetzen der Exzenterschraube 18 in den Eingriffsbereich 17, in welchem sich die Ventilhülse 11 und die Ausgangswelle 4 überlappen, wird das erfindungsgemäße Verfahren anwendbar. In dem im Eingriffsbereich 17 innenliegenden Bauteil, im gezeigten Ausführungsbeispiel die Ausgangswelle 4, befindet sich das Gewinde, in welches die Exzenterschraube 18 eingeschraubt wird. In dem außenliegenen Bauteil, im gezeigten Ausführungsbeispiel die Ventilhülse 11, ist ein Loch angeordnet, welches in seinem Durchmesser im wesentlichen dem Durchmesser des Schraubenkopfes entspricht. Durch Verdrehen der Exzenterschraube kann nunmehr die Axialposition der Ventilhülse 11 relativ zur Ausgangswelle 4 und damit auch relativ zur Eingangswelle 3 eingestellt werden. In dem in Fig. 2 gezeigten Positionierbeispiel befinden sich alle Bauteile in einer optimalen Einstellung. Wie der obere Teil dieser Schnittdarstellung zeigt, befinden sich alle Nuten 14 der Ventilhülse und der Eingangswelle in der hydraulischen Neutralposition zueinander. Die Exzenterschraube ist in dieser optimalen Einstellung in der Längsmittelebene symmetrisch eingeschraubt. Sie fixiert damit den Ventilhülse 11 relativ zur Ausgangswelle 4. Die untere Schnitthälfte zeigt noch den Anschlagbereich 20 zwischen der Eingangswelle 3 und der Ausgangswelle 4, durch welchen der Verdrehwinkel zwischen den beiden Wellen zueinander begrenzt wird.

In dem in Fig. 3 gezeigten Positionierbeispiel ist durch Verdrehen der Exzenterschraube 18 die Position der Ventilhülse 11 zur Ausgangswelle 4 und damit auch zur Eingangswelle 3 verändert worden, so daß die Ausgangswelle 4 und die Eingangswelle 3 hinsichtlich ihrer Ventilnuten nicht mehr im hydraulischen Gleichgewicht sind.

Es ist offensichtlich, daß diese gezeigte Vorrichtung das erfindungsgemäße Verfahren zur Einstellung der hydraulischen Neutralposition eines Servoventils in einem montierten Servolenksystem ermöglicht.

In der in Fig. 4 gezeigten Ansicht ist der Exzenterkopf der Exzenterschraube zu sehen. Diese veranschaulicht nochmal die Einstellbarkeit der Positionierungen.

Es versteht sich von selbst, daß anstelle der Exzenterschraube auch andere Befestigungsmittel verwendet werden können, so lange die Verstellbarkeit der Bauteile zueinander und ihre anschließende Fixierbarkeit gewährleistet ist. Nachdem in dem gezeigten Ausführungsbeispiel die hydraulische Neutralposition eingestellt ist, wird die Exzenterschraube 18 beispielsweise durch Verkleben fixiert. Eine automatische Verstellung ist somit nicht mehr möglich. Zugleich kann auch das Gewinde in der Ausgangswelle 4, in welches die Exzenterschraube 18 eingeschraubt wird, verstemmt werden. Dies geschieht selbstverständlich vor Einsetzen der Exzenterschraube.

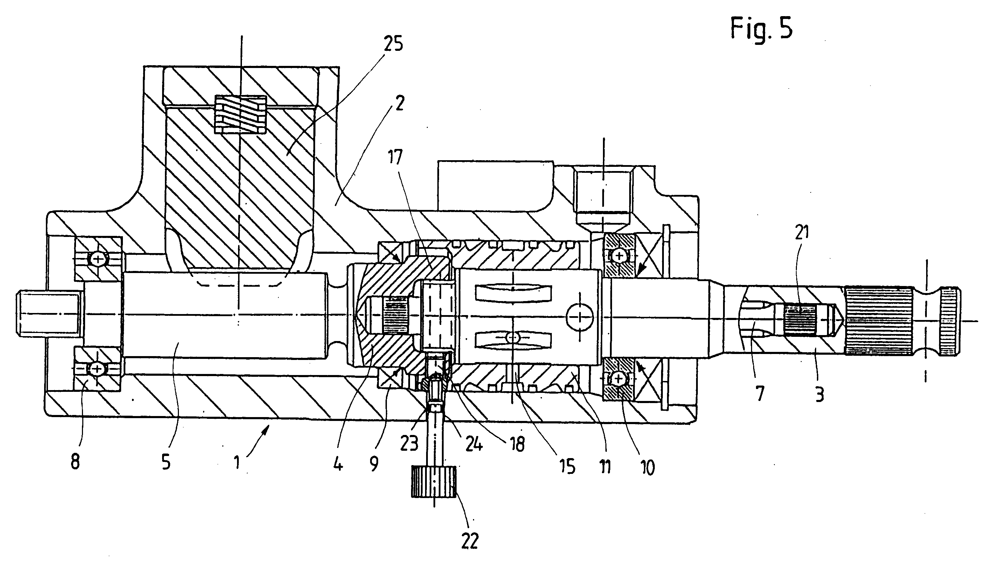

Wie in Fig. 5 gezeigt, ist das montierte Servolenksystem, bestehend aus der Eingangswelle 3, der Ausgangswelle 4, dem Torsionsstab 7 und der Ventilhülse 11 in ein Gehäuse 2 für ein Servolenksystem eingesetzt. Dort ist das Servolenksystem mittels Dichtungen und Lagern 8,9,10 fertig montiert. Ein Schraubendreher 22 ist, mittels einer O-Ringdichtung 23 abgedichtet, in eine Bohrung 24 in der Wandung des Gehäuses 2 eingesetzt. Die Ausgangswelle 4 ist durch einen Wellenkeil 25 gegen Verdrehen gesichert. Der Wellenkeil 25 ist ein mit einem Klemmzahn versehenes Bauelement, welches in das Gehäuse 2 eingesetzt wird und dort zur Verkeilung der Ausgangswelle dient. Mittels des Schraubendrehers 22 kann nun die Exzenterschraube 18 verdreht und damit die Ventilhülse 11 gegenüber der Ausgangswelle 4 eingestellt werden. Ist die hydraulische Mitte eingestellt, kann sie mittels des Schraubendrehers 22 fixiert werden. Anschließend können, nachdem der Hydraulikdruck abgestellt ist, der Schraubendreher 22 und der Wellenkeil 25 entnommen und gegebenenfalls die Gehäusebohrung 24 verschlossen werden. Das Servolenkventil ist dann einsatzbereit. Zur Nachstellung in eingebautem Zustand kann die Bohrung 24 wieder geöffnet werden. Schließlich kann anstelle des Gehäuses 2 auch eine entsprechend ausgebildete besondere Einstellvorrichtung verwendet werden.

### Bezugszeichenliste

- 1: Servolenkung
- 2: Gehäuse
- 3: Eingangswelle
- 4: Ausgangswelle
- 5: Ritzel
- 6: Zahnstange
- 7: Torsionsstab
- 8: Lager
- 9: Lager
- 10: Lager
- 11: Ventilhülse
- 12: Pumpe
- 13: Öltank
- 14: Nuten
- 15: Bohrungen
- 16: Hydraulikmotor
- 17: Eingriffsbereich
- 18: Exzenterschraube
- 19: Gewindeschaftzentrum
- 20: Anschlagbereich
- 21: Axialverzahnung
- 22: Schraubendreher
- 23: O-Ring
- 24: Bohrung
- 25: Wellenkeil

## Patentansprüche

1. Verfahren zur Einstellung der hydraulischen Neutralposition eines Servoventils in einem montierten Servolenksystem, bestehend aus einer Eingangswelle (3), einer Ausgangswelle (4), einem Torsionsstab (7), der mit einem Ende mit der Eingangswelle (3) und dem anderen Ende mit der Ausgangswelle (4) verbunden ist, und einer mit der Ausgangswelle (4) in Eingriff stehenden Ventilhülse (11), welche die Eingangswelle (3) umgibt, **dadurch gekennzeichnet,**
daß die Ventilhülse (11) relativ zur Ausgangswelle (4) um eine gemeinsame Mittelachse verdreht und bei Erreichen der hydraulischen Neutralposition an der Ausgangswelle (4) fixiert wird.

2. Verfahren nach Anspruch 1, dadurch gekennzeichnet, daß die Ventilhülse (11) zur Ausgangswelle (4) in einem in beiden Richtungen festgelegten Winkelbereich verdreht wird.

3. Verfahren nach einem der Ansprüche 1 oder 2, dadurch gekennzeichnet, daß die Fixierung durch Verkleben bewirkt wird.

4. Verfahren nach einem der Ansprüche 1 bis 3, dadurch gekennzeichnet, daß das montierte Servolenksystem in eine hydraulisch dichte Vorrichtung eingesetzt und mit einem durch die Vorrichtungswandung ragenden Werkzeug eingestellt wird.

5. Verfahren nach Anspruch 4, dadurch gekennzeichnet, daß als Vorrichtung ein Servolenksystem-Gehäuse (2) verwendet wird.

6. Verfahren nach einem der Ansprüche 4 oder 5, dadurch gekennzeichnet, daß die Ausgangswelle (4) während des Einstellvorgangs gegen Verdrehung gesichert wird.

7. Verfahren nach einem der Ansprüche 4 bis 6, dadurch gekennzeichnet, daß das die Vorrichtungswandung durchragende Werkzeug gegenüber der Wandung abgedichtet wird.

8. Verfahren nach einem der Ansprüche 5 bis 7, dadurch gekennzeichnet, daß eine zum Einsetzen des Werkzeugs ausgebildete Bohrung (24) in der Gehäusewandung verschlossen wird.

9. Vorrichtung zur Durchführung des Verfahrens nach einem der Ansprüche 1 bis 8 mit einem Servolenksystem, bestehend aus einer Eingangswelle (3), einer Ausgangswelle (4), einem Torsionsstab (7), der mit einem Ende mit der Eingangswelle (3) und dem anderen Ende mit der Ausgangswelle (4) verbunden ist, und einer mit der Ausgangswelle (4) in Eingriff stehenden Ventilhülse (11), welche die Eingangswelle (3) umgibt,
**dadurch gekennzeichnet,**
daß im Eingriffsbereich (17), in dem sich die Ventilhülse (11) und die Ausgangswelle (4) axial überlappen, ein beide Bauteile relativ zueinander fixierendes Befestigungsmittel angeordnet ist, welches in seiner radialen Position zu wenigstens einem der beiden Bauteile variabel ist.

10. Vorrichtung nach Anspruch 9, dadurch gekennzeichnet, daß das Befestigungsmittel eine Exzenterschraube (18) mit einem zum Gewindeschaft exzentrisch angeordneten Schraubenkopf ist.

11. Vorrichtung nach einem der Ansprüche 9 oder 10, dadurch gekennzeichnet, daß die Exzenterschraube (18) im Eingriffsbereich (17) mit dem Gewinde in das innenliegende Bauteil eingeschraubt und mit dem Kopf im außenliegenden Bauteil angeordnet ist.

12. Vorrichtung nach Anspruch 10 oder 11, dadurch gekennzeichnet, daß das Gewinde bauteilseitig deformiert oder unvollständig ausgebildet ist.

13. Vorrichtung nach einem der Ansprüche 9 bis 12, dadurch gekennzeichnet, daß der Torsionsstab (7) in der Eingangswelle (3) mit einer Axialverzahnung (21) befestigt ist.

14. Vorrichtung nach einem der Ansprüche 9 bis 13, dadurch gekennzeichnet, daß das montierte Servolenksystem in eine hydraulisch dichte Vorrichtung eingebaut ist.

15. Vorrichtung nach Anspruch 14, dadurch gekennzeichnet, daß die hydraulisch dichte Vorrichtung ein Servolenksystem-Gehäuse (2) ist.

16. Vorrichtung nach einem der Ansprüche 14 oder 15, dadurch gekennzeichnet, daß in eine Bohrung (24) in der Vorrichtungswandung ein Einstellwerkzeug (22) eingesetzt ist.

17. Vorrichtung nach Anspruch 16, dadurch gekennzeichnet, daß das Einstellwerkzeug ein Schraubendreher (22) ist.

18. Vorrichtung nach einem der Ansprüche 16 oder 17, dadurch gekennzeichnet, daß zur Abdichtung ein O-Ring (23) eingesetzt ist.

19. Vorrichtung nach einem der Ansprüche 9 bis 18, dadurch gekennzeichnet, daß zur Sicherung der Ausgangswelle (4) gegen Verdrehung ein Wellenkeil (25) eingesetzt ist.

20. Vorrichtung nach einem der Ansprüche 16 bis 19, dadurch gekennzeichnet, daß zum Verschließen der Bohrung (24) ein Gewindebolzen eingesetzt ist.
